# FASCICULE DE BREVET EUROPEEN

(11) **EP 0 554 232 B1**
(45) Date de publication et mention de la délivrance du brevet: **25.09.1996**
(21) Numéro de dépôt: 93870011.9
(22) Date de dépôt: 21.01.1993
(51) Int. Cl.: A01D 33/02

(54) **Séparateur de verdure pour une récolteuse de pommes de terre**
Krautzupfer für Kartoffelroder
Haulm separating device for potato harvester

(30) Priorité: 28.01.1992 BE 9200080
(43) Date de publication de la demande: 04.08.1993
(73) Titulaire: A.V.R.-MACHINERY, B-8800 Roeselare (BE)
(72) Inventeur: Nollet, Norbert, B-8800 Roeselare (BE)
(74) Mandataire: Pieraerts, Jacques

(56) Documents cités:
- FR-A- 2 212 993
- FR-A- 2 220 175
- NL-A- 7 400 579
- US-A- 3 198 259

## Description

Cette invention concerne un séparateur de verdure pour une récolteuse de pommes de terre, le séparateur comportant deux tapis de tamisage, le premier tapis de tamisage (8) étant agencé pour entraîner les pommes de terre (4) et la verdure (4') vers le haut en direction du second tapis de tamisage.

Le problème de la séparation des pommes de terre de la verdure n'a pas été résolu jusqu'ici de manière satisfaisante.

Une première solution consiste à récolter les pommes de terre entre une première et une seconde bande tranporteuse de telle sorte, qu'en principe, la verdure parvient sur la seconde bande transporteuse. Attendu que le second tapis de tamisage est équipé de pointes destinées à retenir la verdure, de nombreuses pommes de terre peuvent être endommagées.

Dans d'autres cas on fait usage de tapis de tamisage présentant de grandes ouvertures sur lesquelles tombent les pommes de terre et la verdure. Les pommes de terre ainsi qu'une certaine quantité de petite verdure passent, pour la plus grande partie, au travers des larges ouvertures. Certaines pommes de terre qui sont encore attachées à la verdure sont évacuées avec la verdure de telle sorte qu'une séparation optimale n'a pas lieu.

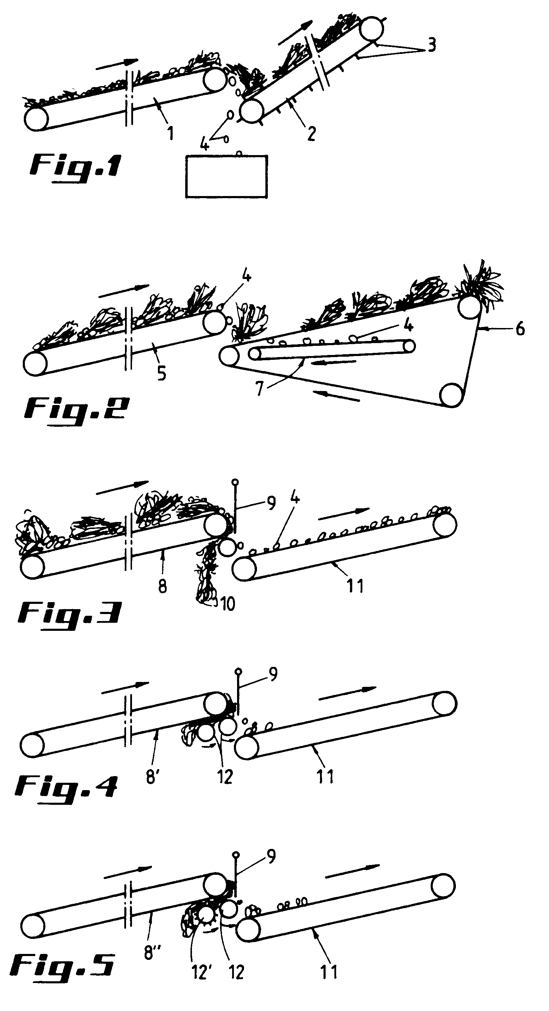

En général on suggère de disposer un rouleau entre deux bandes transporteuses ou tapis de tamisage se faisant suite. Le but est de maintenir coincée la verdure entre le brin inférieur de la bande transporteuse et le rouleau et de la faire évacuer entre ceux-ci. Dans une telle structure il se produit souvent des obstructions qui causent le blocage de la bande transporteuse ou des bandes transporteuses. Les utilisateurs de la machine qui tentent d'évacuer à la main ou en se servant du pied le bouchon qui est formé entre le rouleau et la bande transporteuse risquent de se voir agrippés. De nombreux accidents graves, parfois mortels sont le résultat d'une telle intervention imprudente. Un état de la technique connu dans la pratique est représenté à la figure 3 et montre les caractéristiques du préambule de la revendication 1.

L'invention a pour but de remédier aux inconvénients des séparateurs de verdure décrits dans le préambule et de réaliser un séparateur destiné à une récolteuse de pommes de terre dans laquelle le danger de voir se provoquer des obstructions est devenu inexistant ou pratiquement inexistant.

Pour réaliser cet objectif conformément à l'invention, sous le premier tapis de tamisage sont montés au moins deux rouleaux pour maintenir bloquée et entraîner la verdure entre le brin de retour du premier tapis de tamisage et lesdits rouleaux.

Selon une première forme de réalisation au moins un des rouleaux précités est un rouleau à surface rugueuse.

Selon une forme de réalisation au moins un des rouleaux précités est un rouleau pourvu de pointes saillantes.

Dans une forme de réalisation particulièrement attrayante une bande transporteuse circule au moins le long des deux rouleaux précités et est en contact sur une certaine distance avec le brin de retour du premier tapis de tamisage afin de maintenir coincée et de déplacer la verdure entre le tapis de tamisage et la bande transporteuse.

D'autres détails et avantages de l'invention ressortiront de la description qui sera donnée ci-après d'un séparateur de verdure pour une récolteuse de pommes de terre, selon l'invention. Cette description n'est donnée qu'à titre d'exemple et ne limite pas l'invention. Les notations de référence se rapportent aux figures ci-jointes.

Les figures 1 à 3 illustrent ce qui peut être considéré comme l'état de la technique.

La figure 1 représente une vue latérale schématique du tapis de tamisage s'étendant vers le haut suivi d'un second tapis ou bande transporteuse équipée de pointes. Les pommes de terre sont supposées tomber entre le tapis de tamisage et la bande transporteuse.

La figure 2 représente la combinaison de deux bandes transporteuses dans laquelle la seconde bande transporteuse est un tapis de tamisage à larges ouvertures sur lequel sont déposées les pommes de terre et la verdure.

La figure 3 se rapporte à la combinaison de deux bandes transporteuses dans laquelle, sous la première bande transporteuse, qui est conçue comme un tapis de tamisage, un cylindre de verdure est disposé.

La figure 4 se rapporte à un séparateur de verdure selon l'invention, dans une première forme d'exécution.

La figure 5 se rapporte à un séparateur de verdure selon l'invention, dans une seconde forme d'exécution.

Les figures 6 et 7 se rapportent à un séparateur de verdure selon l'invention dans deux formes d'exécution particulièrement attrayantes (à une échelle agrandie).

Les inconvénients du séparateur de verdure selon la figure 1 qui, comme les séparateurs de verdure selon les figures 2 et 3, appartient à l'état de la technique, doivent être vus dans le fait qu'un grand nombre de pommes de terre sont blessées lors des manipulations. Les pommes de terre 4 ainsi que la verdure 4' sont entraînées vers le haut par une bande convoyeuse 1 ou tapis de tamisage et tombent entre cette bande transporteuse et une bande transporteuse 2 équipée de pointes. Cette seconde bande transporteuse équipée de pointes se déplace dans une zone que les pommes de terre 4 traversent lors de leur chute.

La forme d'exécution connue, selon la figure 2, comprend une première bande transporteuse 5 sur laquelle les pommes de terre et la verdure sont déplacées vers le haut. Les pommes de terre 4 passent au travers d'une bande transporteuse à larges ouvertures 6, ou tapis de tamisage, qui assure également l'évacuation de la verdure 4'. Les pommes de terre 4 sont réceptionnées par une autre bande transporteuse telle que par exemple une bande transporteuse 7. L'inconvénient de cette forme d'exécution connue réside dans une mauvaise séparation de la verdure et des pommes de terre. De nombreuses pommes de terre ne parviennent pas sur la bande transporteuse 7.

La forme d'exécution selon la figure 3 comporte un premier tapis de tamisage 8 qui transporte les pommes de terre et la verdure vers le haut au travers de guides qui sont représentés ici de façon fort schématique. La notation de référence 9 désigne un tel guide qui évacue la verdure vers un cylindre 10. Les pommes de terre 4 sont réceptionnées par une seconde bande transporteuse 11.

Le grand danger que présente cette construction doit être vu dans le fait que entre le tapis de tamisage 8 et le cylindre 10 la verdure coincée peut bloquer l'installation. Lors d'une tentative faite par un utilisateur d'évacuer le bouchon des accidents graves, et même mortels, se produisent régulièrement. Lorsque l'utilisateur tente de faire passer le bouchon en se servant de la main ou du pied, une telle manipulation imprudente peut provoquer de graves accidents. En principe, la demande de brevet français 2 212 993, appartient à cette catégorie.

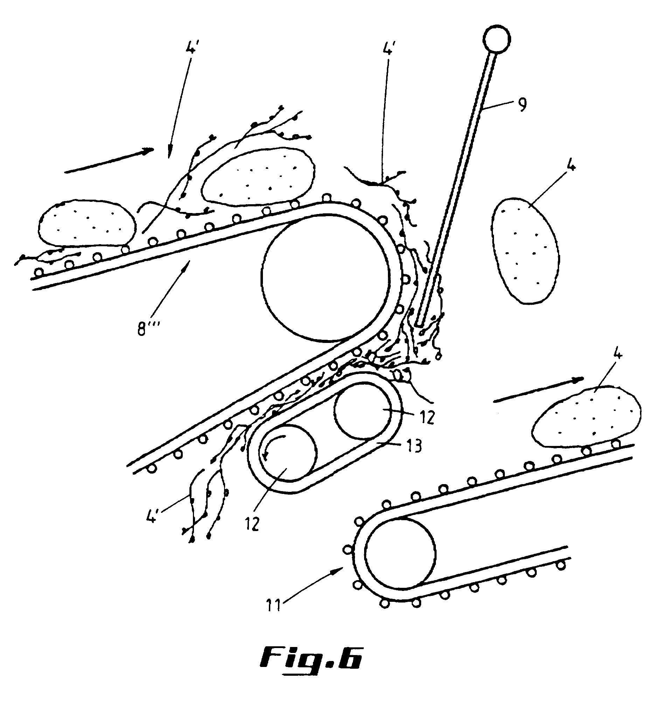

L'invention a donc pour but de proposer un séparateur de verdure dans lequel le danger de voir le premier tapis de tamisage 8', 8'' est pratiquement devenu inexistant. En prévoyant au moins deux rouleaux 12, 12 (figure 4) ou 12, 12' (figure 5), un effort de traction suffisant est exercé sur la verdure 4' de telle sorte que toute obstruction provoquée par la verdure 4' entre ces rouleaux et le brin inférieur des bandes transporteuses ou du tapis de tamisage 8' et 8'' est devenue impossible.

Le but de l'invention est donc d'augmenter l'effort qui exercé par les rouleaux 12, 12' sur la verdure 4'. Un effet supplémentaire doit être vu dans le fait que lors d'un premier début d'obstruction causé par la masse de verdure une partie de celle-ci est désintégrée ce qui garantit un fonctionnement régulier de cette partie de la machine.

On peut, en l'occurrence, faire usage de deux rouleaux identiques 12, le sens de rotation étant indiqué par les flèches, et la surface d'au moins un de ces rouleaux peut être rugueuse. Par exemple, un des rouleaux, par exemple le rouleau 12', peut être pourvu de petites pointes ou d'irrégularités (figure 5). Grâce à l'utilisation d'un tel jeu de rouleaux le problème de l'obstruction causé par la verdure est complètement résolu et les utilisateurs de la machine ne doivent plus intervenir manuellement.

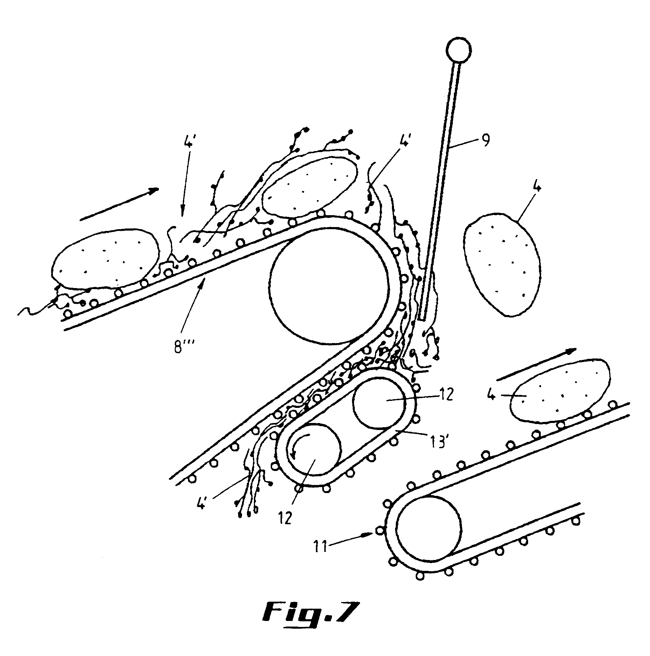

Dans une forme d'exécution très remarquable illustrée par les figures 6 et 7 une troisième bande transporteuse 13, respectivement 13' est conduite le long des rouleaux 12. Cette bande transporteuse 13 peut être une bande transporteuse lisse mais à la place de celle-ci on peut également faire usage d'une bande nervurée ou d'une bande du type "hérisson".

A la figure 6 on a représenté une bande transporteuse lisse. Selon la figure 7 on fait usage d'une chaîne transporteuse 13'.

En introduisant une bande transporteuse conforme à l'un des types précités, la surface de contact avec le brin de retour de la première bande transporteuse 8''' ou tapis de tamisage se trouve sensiblement agrandi de telle sorte que la verdure 4' est détectée et évacuée avec toute la force possible. La force avec laquelle la troisième bande transporteuse 13, respectivement 13' est appliquée contre le brin de retour de la première bande transporteuse 1 peut être réglable. De même, lors de la disposition des bandes transporteuses 13 ou 13', la verdure peut être appliquée par des guides élastiques 9 contre la bande transporteuse 1 dans le sens de la troisième bande transporteuse 13, respectivement 13'.

Comme il a déjà été clairement expose, la disposition d'une troisième bande transporteuse est à conseiller parce que ceci permet d'arracher et de déchiqueter parfaitement la verdure tandis que le déplacement de celle-ci est assuré sans que le bon fonctionnement de la récolteuse de pommes de terre ne s'en trouve perturbé.

## Revendications

1. Séparateur de verdure pour une récolteuse de pommes de terre, le séparateur comportant deux tapis de tamisage, le premier tapis de tamisage (8) étant agencé pour entraîner les pommes de terre (4) et la verdure (4') vers le haut en direction du second tapis de tamisage (11), et un rouleau monté sous le premier tapis de tamisage (8), caractérisé en ce que sous le premier tapis de tamisage (8) est monté au moins un deuxième rouleau (12), les rouleaux étant parallèles et agencés pour maintenir bloquée et entraîner la verdure entre le brin de retour du premier tapis de tamisage (8) et lesdits rouleaux.

2. Séparateur de verdure selon la revendication 1, caractérisé en ce qu'au moins un des rouleaux précités est un rouleau (12) à surface rugueuse.

3. Séparateur de verdure selon la revendication 1, caractérisé en ce qu'au moins un des rouleaux précités est un rouleau (12') pourvu de pointes saillantes.

4. Séparateur de verdure selon la revendication 1, caractérisé en ce qu'une bande transporteuse (13, resp. 13') circule au moins le long des deux rouleaux précités (12) et est en contact sur une certaine distance avec le brin de retour du premier tapis de tamisage (8''') afin de maintenir coincée et de déplacer la verdure (4') entre les tapis de tamisage (8''') et la bande transporteuse (13, resp. 13').

## Claims

1. A foliage separator for a potato harvester, the separator comprising two sifting belts, the first sifting belt (8) being arranged in order to lead the potatoes (4) and the foliage (4') upwards in the direction of the second sifting belt (11), and a roller mounted under the first sifting belt (8), characterised in that under the first sifting belt (8) is mounted at least a second roller (12), the rollers being parallel and arranged in order to keep confined and to lead the foliage between the return run of the first sifting belt (8) and the said rollers.

2. A foliage separator in accordance with claim 1,
characterised in that at least one of the aforementioned rollers is a roller (12) with a roughened surface.

3. A foliage separator in accordance with claim 1,
characterised in that at least one of the aforementioned rollers is a roller (12') provided with projecting points.

4. A foliage separator in accordance with claim 1,
characterised in that a conveyor belt (13, respectively 13') circulates at least around the two aforementioned rollers (12) and is in contact for a certain distance with the return run of the first sifting belt (8''') in order to keep wedged and to move the foliage (4') between the sifting belt (8''') and the conveyor belt (13, respectively 13').

## Patentansprüche

1. Krautabstreifer für einen Kartoffelroder, umfassend zwei Siebbänder, von denen das erste Siebband (8) so angeordnet ist, daß die Kartoffeln (4) und das Kraut (4') nach oben in Richtung auf das zweite Siebband (11) befördert werden, und eine unterhalb des ersten Siebbands (8) angebrachte Walze, dadurch gekennzeichnet, daß unterhalb des ersten Siebbands (8) mindestens eine zweite Walze (12) angeordnet ist, wobei die Walzen parallel zueinander und derart eingerichtet sind, daß das Kraut zwischen dem Rücklauftrum des ersten Siebbands (8) und den Walzen zusammengehalten und mitgenommen wird.

2. Krautabstreifer nach Anspruch 1, dadurch gekennzeichnet, daß mindestens eine der genannten Walzen eine Walze (12) mit einer aufgerauhten Oberfläche ist.

3. Krautabstreifer nach Anspruch 1, dadurch gekennzeichnet, daß mindestens eine der genannten Walzen eine Walze (12') ist, die mit vorstehenden Spitzen ausgestattet ist.

4. Krautabstreifer nach Anspruch 1, dadurch gekennzeichnet, daß ein Förderband (13 bzw. 13') zumindest um die zwei genannten Walzen (12) umläuft und mit dem Rücklauftrums des ersten Siebbands (8''') über eine gewisse Strecke in Berührung steht, um das Kraut (4') zwischen dem Siebband (8''') und dem Förderband (13 bzw. 13') eingeklemmt zu halten und zu verlagern.
